# EUROPEAN PATENT SPECIFICATION

(11) **EP 3 470 593 B1**
(45) Date of publication and mention of the grant of the patent: **19.07.2023**
(21) Application number: 17461621.9
(22) Date of filing: 16.10.2017
(51) Int. Cl.: E04B 2/76, E06B 3/964, E06B 3/968, E06B 3/98, F16B 7/04, F16B 7/18, F16B 12/50

(54) **A SYSTEM OF A PROFILE AND A T-CONNECTOR FOR CONNECTING PROFILES**
SYSTEM AUS PROFIL UND T-VERBINDER ZUM VERBINDEN VON PROFILEN
SYSTÈME D' UN PROFIL ET UN RACCORD EN T PERMETTANT DE RELIER DES PROFILS

(43) Date of publication of application: 17.04.2019
(73) Proprietor: Hydro Building Systems Poland Sp. z o.o., 03-828 Warszawa (PL)
(72) Inventor: Buchnajzer, Mariusz, 95-030 Czyzeminek (PL); Brych, Lukasz, 92-532 Lódz (PL)
(74) Representative: Patpol Kancelaria Patentowa Sp. z o.o.

(56) References cited:
- EP-A2- 1 020 575
- EP-A2- 2 767 664
- DE-A1- 4 210 456
- DE-U1-202010 015 317
- IT-A1- BL20 090 002
- US-B1- 9 366 072

## Description

### TECHNICAL FIELD OF THE INVENTION

The present invention relates to a system for connecting two profiles at an angle, especially connecting two profiles at a right angle, comprising a profile and a T-connector for connecting a first profile with a second profile. In particular, for connecting aluminum hollow profiles. The T-connectors are used for connecting profiles that form support construction for a glass panels.

The construction for a glass panel usually bears heavy loads and is exposed to changeable ambient temperature. Since the glass panels usually form terminal surface of the building, thus, the construction is exposed to the internal ambient temperature and external ambient temperature at the same time. The difference between the external and internal ambient temperature values is usually considerable. Temperature of different and changeable value acting on the construction may causes changes of dimensions of metal components of the construction, which makes the construction not tight, thus a leakage in the construction for a glass panel may occur. The leakage in the construction for a glass panel causes that air and water might be present inside the construction. The presence of water and air is highly undesirable, since water and air cause corrosion when they appear inside of the construction. Therefore, every play or inaccuracy between metal components of the structure, especially when the change of dimension of metal components occurs, highly increase a risk of a leakage of the construction. Thus, since the changes in dimensions of the metal components occurs, the construction for a glass panel needs to be realized with very high accuracy. In the construction, points in which components of the construction are connected are especially susceptible to potential leakage. Therefore, components of the glass panel construction need to be connected with very high accuracy in order to minimalize a risk of a leakage. The metal components of the construction comprises profile and T-connector for connecting the profiles.

### STATE OF THE ART

EP1795665 discloses T-joint for jointing two profiles (i.e. struts) at the right angle. The T-joint is fastened within a terminate part of one profile and then connect to a wall of the other profile. A body of the T-joint comprises two parts. A first, main part, which is fixed in a profile and a second part which is separated from the above mentioned first part. The first part and the second part form together the T-joint.

Other examples of such systems are known from EP 1 020 575 A2 and EP 2 767 664 A2.

The T-joint of the type described above is generally complex. A position of the movable second part of the T-joint may be changed with respect to the first part making the connection between the profile and the T-joint arranged improperly. Thus, the T-joint is not properly clamped within the profile such that fastening of the T-joint inside the profile is no longer assured.

Another disadvantage of such a T-joint is assembly of the T-joint within a profile, which is time-consuming, since not only the first part of the T-joint needs to be positioned within the profile but also the movable second part needs to be arranged with respect to the profile and the first, main part of the T-joint. Thus, the two parts need to be positioned not only with respect to the profile but also with respect to each other. This makes the assembly of the profiles more time consuming. Moreover, the probability of incorrectly assembling the profiles and the T-joint with respect to each other is significant.

An issue which also influences the leakproof tightness of the construction is the way how the T-joint, when mounted within a profile, is mounted to a second profile. EP1795665 discloses T-joint connecting two profiles. The T-joint comprises a peg (i.e. pen) which works in conjunction with an opening in the other profile. The profile can move in the body of the T-joint between the rest position whereby the above-mentioned peg is pushed out of the guide and pushed-in position. The peg is provided with springy elements and the peg hooks behind the wall of the other profile. After one end of the peg is hooked behind the wall then the other end of the peg is fixed in the T-joint thus providing connection between the peg and the other profile.

The disadvantage of the prior art solution is that the length of the connection between the T-joint and the other profile cannot be regulated i.e. adjusted. This is because the peg of the T-joint may take only a predetermined position with respect to the T-joint and the other profile. Thus, a play between the peg of the T-joint and the other profile may occurs. This situation is very common, since in practice, the profiles have dimensions which are uneven along the length of the profile. This irregularity in dimensions results from inaccuracy in manufacture, and/or inaccuracy of positioning the T-joint in the profile and/or inaccuracy in cutting the profile and/or inaccuracy in positioning the profile. Since the position of the peg of the T-joint cannot be adjusted to a length of the distance between the T-joint and the second profile, the two profiles are connected by the T-joint with a play between the peg of the T-joint and the second profile. As a result, the connection between profiles is susceptible to the potential leakage.

### DISCLOSURE OF THE INVENTION

In order to solve the above mentioned problems, the present invention provides a system of a T-connector and a profile for receiving the T-connector, according to claim 1.

According to the invention there is provided a T-connector for fastening within a profile for connecting a first profile with a second profile at an angle, the T-connector comprising a body shaped so that the body is axially fastenable within the first profile, the body is provided with a longitudinal recess provided in axial direction of the body, the recess constitutes a first part of a port for receiving fastening means for fastening the T-connector within the first profile, and the longitudinal recess provided in the body is shaped for cooperating with a longitudinal recess which constitutes a second part of the port provided in the first profile, thus when the T-connector is provided within the first profile, the recess formed in the T-connector and the recess in the profile form a complete port for receiving the fastening means.

An advantage of the T-connector according to the invention is that the T-connector is simple in construction and easy to assembly and provide high connection strength. The T-connector and the profile are connected directly. i.e. no additional elements, except fastening means are required. Therefore, a risk of incorrect positioning of the T-connector within the profile is reduced and improving accuracy of positioning the T-connector in the profile is achieved. Moreover, a number of elements required for assembling is reduced, making assembling of the T-connector less time consuming and cheaper. The T-connector according to the invention provides strong connection which is less susceptible to a leakage.

According to the invention, the body is provided with two recesses, each recess is arranged at the corner area of the body suitable for inserting into a corresponding corners of the first profile.

Arranging the recesses of the T-connector in the corner area of the body is easy to manufactured and provides the most preferred connection between the T-connector and the profile.

Preferably, the recess provided in the body constituting the first part of the port is shaped so that the recess forms substantially a half of the port for receiving the fastening means.

Since the recess in the T-connector is complementary to the recess in a profile and forms substantially a half of the port for receiving connecting means, the process of assembling of the T-connector and the profile is very easy and provides the most durable connection. Moreover, the recess is easy to manufacture both in the T-connector and in the profile. In addition, the port is provided only at ends of the profile, whereas the ends of the profile are in locations, where the port is actually needed. As a result, less material is used for manufacturing the profile. However, the recess provided in the T-connector may also provide less or more than a half of the port. For example, the recess provided in the T-connector may form about 40% of circumference of the port. In such a case, the recess provided in the profile form about 60 % of circumference of the port.

According to the invention, the recess provided in the body when cooperating with the recess provided in the profile forms together the port in the form of longitudinal opening.

Preferably, the recess provided in the body has a widen portion for facilitating location of fastening means into the port, the widen portion is located at an entry of the recess which first receive the fastening means during assembly.

The widen portion of the recess makes the process of assembling faster.

Preferably, the T-connector is made of metal, preferably zinc and aluminum based alloys.

Preferably, the T-connector is cut from a longitudinal aluminum profile.

In preferred embodiment, the recess provided in the body when cooperating with the recess provided in the profile form a port suitable for receiving a thread-forming screw.

Since the port is configured for receiving a thread-forming screw, no thread need to be formed in a body of a T-connector, neither in the profile.

The T-connector according to the invention comprises the body provided with a hole arranged in the axial direction of the body, and in the hole connecting means for connecting the first profile with the second profile are provided, the connecting means comprise:
a peg comprising a cavity for accommodating an edge of an opening provided in the second profile, and
a bolt for adjusting a position of the peg in the axial direction in continuous manner to fix a position of said peg with respect to the second profile.
The connecting means provides regulation of a position of peg with respect to the second profile, thus providing the fixed connection at desired position.

According to the invention there is provided a T-connector for fastening within a profile for connecting a first profile with a second profile at an angle, the T-connector comprises a body shaped so that the body is axially fastenable within the first profile. The body is provided with a hole arranged in the axial direction of the body, and in the hole connecting means for connecting the first profile with the second profile are provided, the connecting means comprise:
a peg comprising a cavity for accommodating an edge of an opening provided in the second profile, and
a bolt for adjusting a position of the peg in the axial direction in continuous manner to fix a position of said peg with respect to the second profile.

The T-connector according to the invention provides that a position of the peg can be regulated, i.e. adjusted to a real distance between the T-connector and the second profile. The peg hooks the wall of the opening provided in the second profile. The peg is fixed with respect to the T-connector and the second profile. The T-connector is especially advantageous for the profiles having uneven dimensions along the length of the profiles. The T-connector according to the invention provides that, irrespective of the irregularity in dimensions of the profiles and imperfection of relative position between two profiles, the position of the peg of the T-connector with respect to the second profile is fixed without play. Therefore, the position of the first profile with the T-connector is fixed with respect to the second profile. Since a play between the peg of the T-connector and the second profile is avoided, the connection is fixed and high tightness of the connection is achieved.

According to the invention there is provided a profile provided with means for receiving a T- connector for connecting two profiles at an angle. The profile is shaped so that the internal adjacent corners of the profile form a recess which constitute a second part of a port for receiving fastening means for fastening the T-connector within the profile and the recess provided in the profile is shaped so that is suitable for cooperating with a recess provided in the body which constitute a first part of the port provided in the T-connector, thus the recess provided in the T-connector forms with the recess provided in the profile a complete port for receiving the fastening means when the T-connector is provided within the first profile.

The recess formed in the profile being a second part of the port for receiving connection means results in that an additional material of the profile is formed along to the profile. Thanks to the fact that the port is formed along the whole length of the profile, the port increases stiffness of the whole profile, increasing thereby the stiffness of the whole structure. Moreover, the profile may be cut from a longitudinal profile and cut to a desired length at any point while keeping its advantageous feature of being complementary in shape to the T-connector. Thus, no additional components or operations are required in order to receive the T-connector in the profile according to the invention. Moreover, since corners are the most overrigid area of the profile, arranging the recess formed in the profile in the corners reduce a risk of forming a deformation of the profile.

According to the invention, each second recess is arranged inside the profile in two adjacent corners within the profile.

An advantage of the profile according to the invention is that the recess forming the second part of the port for receiving connecting means is arranged in corners which are adjacent to the back wall of the profile, thus the recess reinforces the profile in the area of the port which is subjected to high loads in the structure for glass panels. This reinforcement is especially advantage since the reinforcement increases stiffness of the profile both along the profile and crosswise the profile.

Preferably, the recess provided in the profile is arranged at the terminate parts of the first profile suitable for receiving the T-connector.

When the part of the port is arranged at the terminate section of the profile, the material of the profile is saved. Moreover, the terminate parts of the profile increase stiffness of the profile at locations which are subjected to the highest loads.

In one of the embodiment, the recess provided in the profile is arranged only at the terminate parts of the first profile suitable for receiving the T-connector.

Preferably, the second part of the port is suitable for receiving a thread-forming screw when cooperating with the second part of the port.

Providing the recess configured for receiving a thread-forming screw makes the process of manufacturing the profile easier, since no thread needs to be formed in the profile.

Forming the recess being the second part of the port as configured for receiving a thread forming screw makes the manufacture of the profile simpler and cheaper. The configuration suitable for receiving the thread forming screw is for example realized as longitudinal grooves shaped in substantially rounded internal corner of the profile. This is especially advantageous since forming the part of the port as longitudinal grooves is very easy to manufacture.

According to the invention there is provided a system for connecting a first profile with a second profile at the angle, comprising the profile according to the invention and the T-connector according to the invention.

The system according to the present invention enjoys all benefits and advantages of the T-connector and the profile according to the invention.

### BRIEF DESCRIPTION OF FIGURES

The present invention is described in greater details with reference to the accompanying figures, in which:
Fig. 1A shows an exploded view of a profile assembly comprising a T-connector according to the first embodiment of the invention;
Fig. 1B shows an exploded view of a profile assembly comprising a T-connector according to the second embodiment of the invention;
Fig. 2 shows a front view of the T-connector according to a first embodiment of the invention fastened within a profile in an assembled state;
Fig. 3 shows an exploded view of two profiles assembly comprising a T-connector according to a second embodiment of the invention;
Fig. 4A shows a perspective cross section of two profiles assembly comprising a T-connector according to the second embodiment of the invention in an assembled state;
Fig. 4B shows an enlarged view of perspective cross section of two profiles assembly comprising a T-connector according to the second embodiment of the invention in an assembled state;
Fig. 5A shows a front view of the T-connector according to the first embodiment of the invention;
Fig. 5B shows a side view of the T-connector shown in Fig. 5A;
Fig. 5C shows a perspective view of the T-connector shown in Fig. 5A;
Fig. 6A shows a front view of a T-connector according to the second embodiment of the invention;
Fig. 6B shows a side view of the T-connector shown in Fig. 6;
Fig. 6C shows a perspective view of the T-connector shown in Fig. 6A.

### DETAILED DESCRIPTION OF THE INVENTION

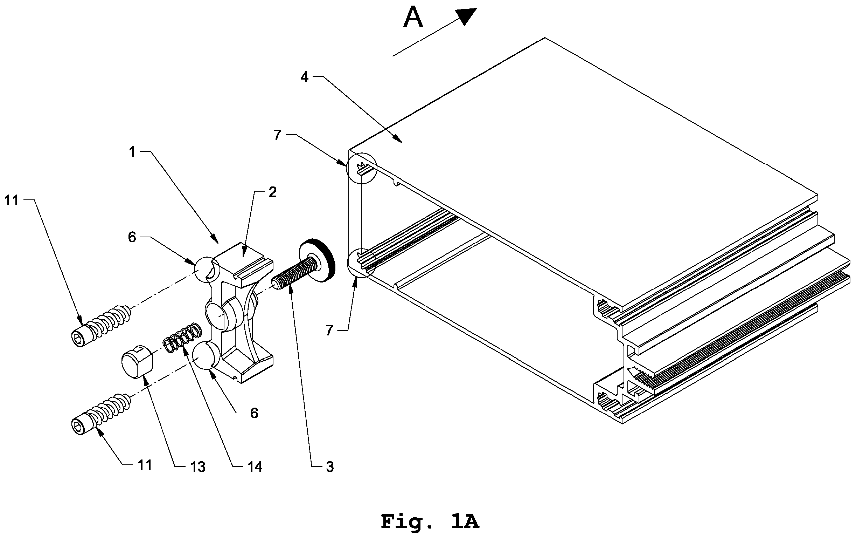

Fig. 1A shows a T-connector 1 according to the present invention. The T-connector 1 comprises a body 2. The body 2 is shaped so that the body 2 can be axially inserted and fastened within a first profile 4. It should be noted that terms "first" and "second" concerning profiles are used only in purpose to distinguish between a profile in which the T-connector is mounted and a profile to which the T-connector is attached. In practice the first profile and the second profile may have the same structure and may be mounted in the way around.

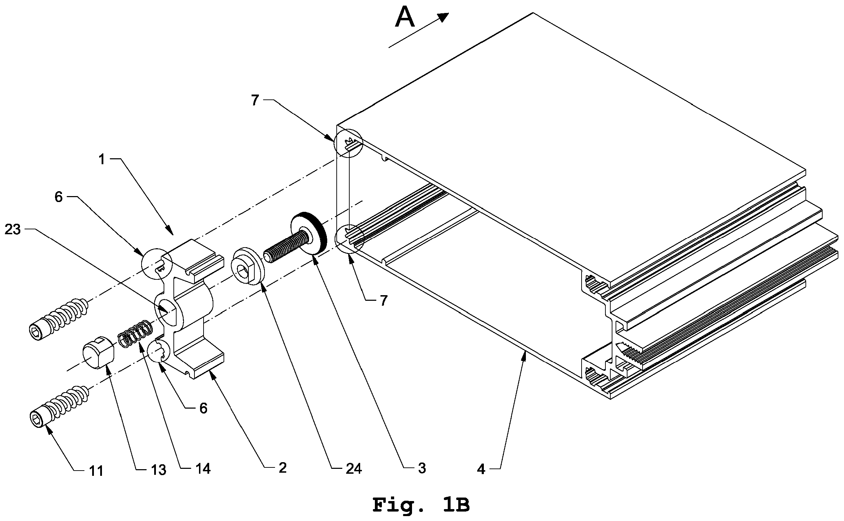

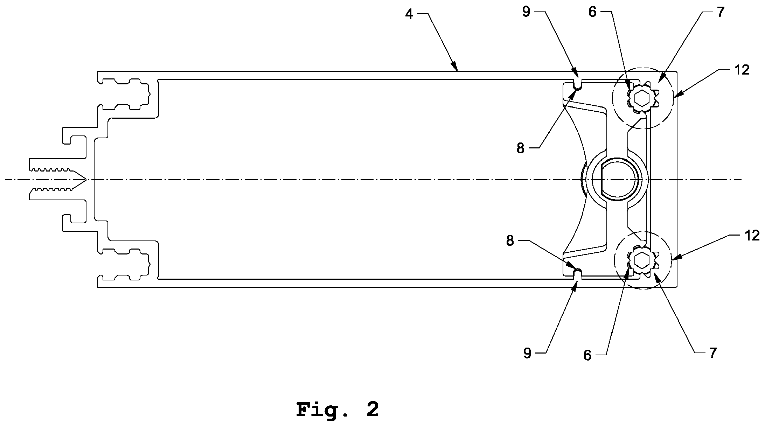

The body 2 is configured to be inserted into the first profile 4 axially, i.e. along longitudinal direction of the first profile 4, indicated with arrow A in the Fig. 1A and Fig. 1B. Is should be noted that the terms "longitudinal" concerning the direction in the T-connector, as used within the present disclosure, is the direction of the T-connector parallel to the main axis of a profile, when mounted within the profile. The body 2 comprises two longitudinal recesses 6. Each recess 6 forms a first part of a port 12 (shown on Fig. 2) for receiving fastening means 11 for fastening the T-connector 1 within the profile 4. Each recess 6 is arranged along the preferably along the whole length of the T-connector 1. However, alternatively the recess provided in the T-connector 1 is provided only along a part of length of the T-connector, which means that the recess does not extend through the body 2 of the T-connector. Each recess 6 is arranged in corner area of the T-connector 1, as shown in Fig. 1A. The corner areas of the T-connector 1 are parts of the T-connector 1 located in the extremity of the T-connector 1 which are located adjacent to the corner area of the first profile when the T-connector is arranged within the first profile 4.

The second part of the port 12 is formed by a longitudinal recess 7 comprised in the first profile 4. In the first profile 4 two recesses 7 are provided. Each recess 7 is provided in a corner area of the first profile 4 respectively, as shown in Fig. 1A. The corner area of the first profile 4 are arranged in an area where rear wall of the first profile 4 contacts with side walls of the first profile 4. The recess 7 is shaped along the length of the first profile 4, preferably along the whole length of the first profile 4. The recess 7 provided in the profile 4 when cooperates with the recess 6 provided in the body 2 of the T-connector 1 forms the port 12 for receiving fastening means 11.

Fig. 2 shows side view of the T-connector according to the invention when the T-connector 1 is fixed within the profile 4. When the T-connector 1 is inserted into the first profile 4, the recess 6 forming the first part of the port 12 provided in the body 2 is located adjacent to the recesses 7 constituting the second parts of the port 12 formed in the first profile 4. Thus, the recess 6 provided in the body 2 with the recess 7 provided in the first profile forms together the port 12 for receiving the fastening means 11, as shown in Fig. 2. The fastening means 11 are introduced to each port 12 as shown in Fig.2. In the embodiment shown, the fastening means 11 are thread-forming screw. The T-connector 1 is positioned in the profile 4 at a terminate part of the profile 4. When the T-connector 1 is inserted to the first profile 4 and the port 12 is formed, the fastening means 11 are screwed into the port 12 the T-connector 1 is fixed within the first profile 4. The port 12 has a shape of a longitudinal opening. The fastening means 11 are preferably screw, as shown for example on Fig. 1A and Fig. 1B, more preferably thread-forming screw. The screw comprise a head. The head of the screw has diameter smaller than diameter of the screw. The fastening means 11, preferably thread-forming screw are screwed into the port 12 thus fastening the T-connector 1 within the first profile 4.

The T-connector 2 also comprises positioning means for positioning the T-connector 1 within the first profile 4. In As shown in the figures, exemplary positioning means are at least one groove 8 shaped along in the longitudinal direction of the body 2. Each groove 8 receives longitudinal projection 9 formed within the first profile 4.

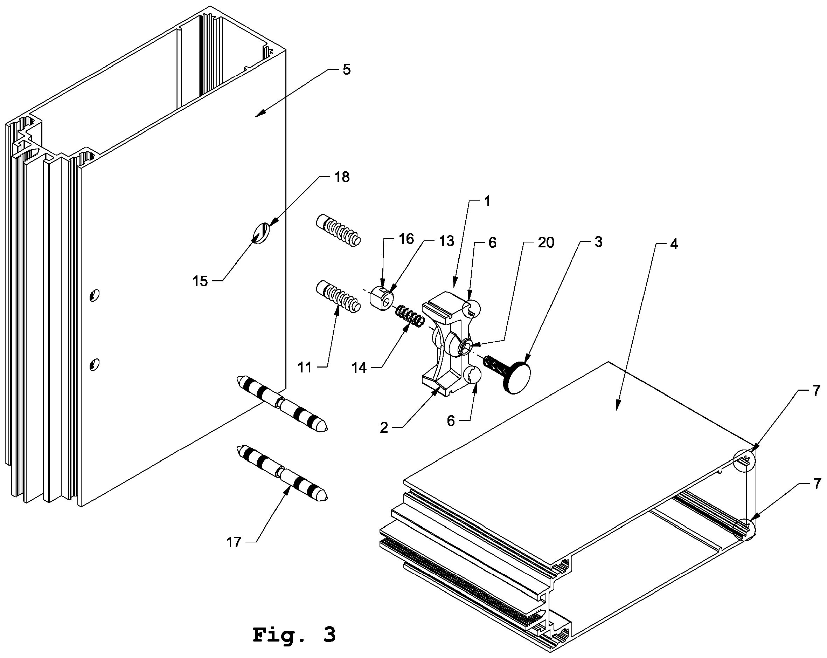

In order to subsequently provide a connection between the first profile 4 and the second profile 5, the first profile 4 is connected with the second profile 5 via connecting means provided with the T-connector 1. The connecting means engage the first profile 4 with the second profile 5. Fig. 3 shows an exploded view of the first profile 4 and the second profile 5 with the T-connector 1. When the T-connector 1 is fixed in the profile 4 by means of the fastening means 11, a connecting means comprising a peg 13, spring means 14 and a bolt 3 are used. The connecting means are arranged in a through hole 20 provided in the body 2 of the T-connector 1. The bolt 3 cooperates with the peg 13 in such a way that the bolt 3 adjusts a position of the peg 13 with respect to the second profile 5. The peg 13 comprises a cavity 16. The cavity 16 is configured to be hooked over an edge 18 of an opening 15 in the second profile 5. The hooking is realized in the following way: the peg 13 is inserted to the opening 15 provided in the second profile 5. The cavity 16 of the peg 13 is positioned in front of the edge 18 of the opening 15. The edge 18 of the opening 15 is then inserted into the cavity 16. When the edge 18 of the opening 15 is received in the cavity 16, the position of the peg 13 is adjusted by the bolt 3 to the distance between the body 2 of the T-connector 1 and the second profile 5, providing thereby the connection between the first profile 4 and the second profile 5 is provided without play.

The bolt 3 is screwed through the T-connector to the peg 13. Between the bolt 3 and the peg 13, the spring means 14 in the form of a spring are provided. When the cavity 16 of the peg 13 received the edge 18 of the opening 15 for receiving the peg 13, the bolt 3 is screw into the peg 13 in order to fix first profile 4 with respect to the second profile 5 and provide connection without play between the profiles. Since the bolt 3 is threaded the regulation is continuous. Thus, the fixing is performed with very high accuracy. Moreover, the first profile 4 is fixed to the second profile 5 via typical fixing pins 17.

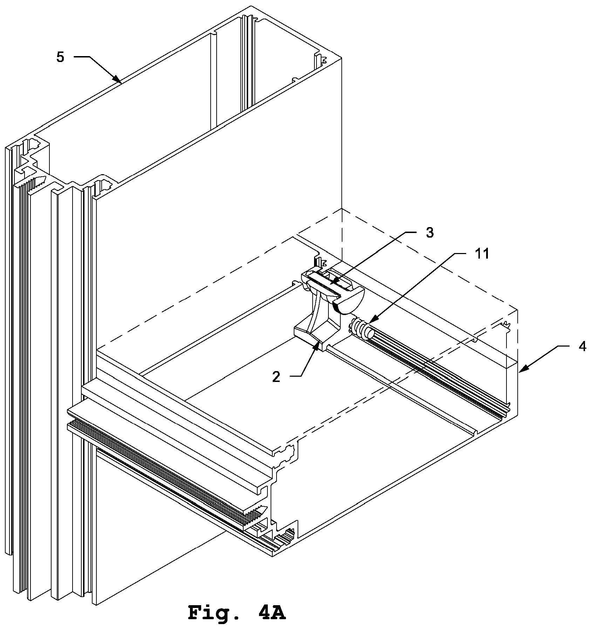

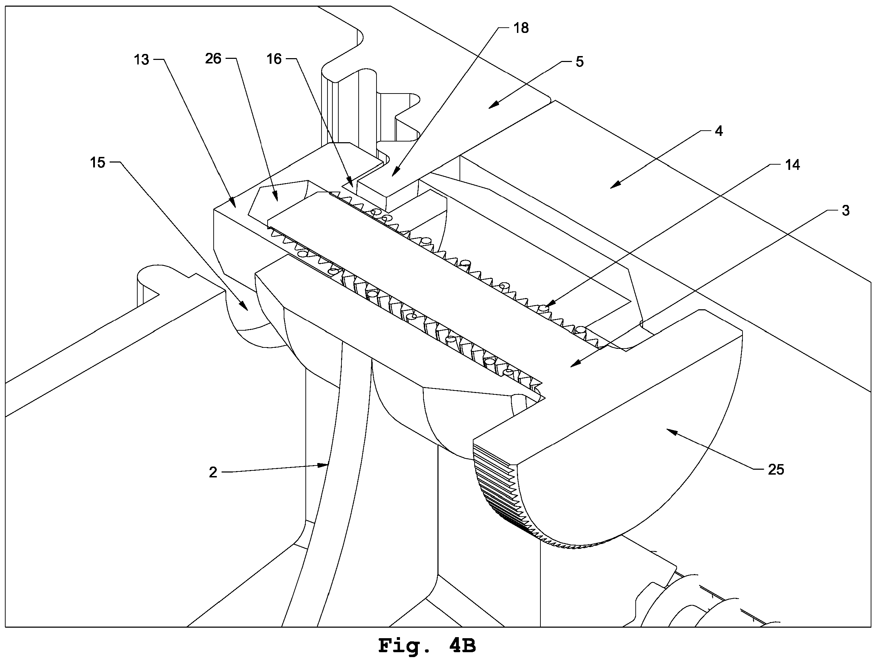

The system according to the invention comprising the first profile 4, the second profile 5 and the T-connector according to the invention and the system is shown in detail in Fig. 4A and Fig. 4B which depicts a cross-section of the first profile 4 and the second profile 5 with the T-connector 1 when assembled. Fig. 4A shows enlarged view of cross-section- of the T-connector 1 when assembled. The threaded bolt 3 is arranged inside opening 20 of the T-connector 1. The bolt 3 comprises bolt head 25 which protrudes from opening 20 at regulatory side 22 of the T-connector 1. The bolt 3 is screwed into the peg 13 arranged on a peg side 23 of the T-connector 1. The peg side 23 of the T-connector 1 is a side which is faced to the second profile 5. The peg 13 comprises a receiving hole 26 for receiving the bolt 3. The receiving hole 26 is threaded. The receiving hole 26 receives an end of the threaded bolt 3. The edge 18 of the opening 15 is accommodated within the cavity 16 when assembled. The cavity 16 is configured for receiving the edge 18 of the wall of the second profile 5 in order to allow accommodating the edge 18 within the cavity 16. When assembled, the peg 13 is at least partially arranged inside the T-connector 1 as shown in Fig. 4A and Fig. 4B. The external shape of the peg 13 corresponds to the shape the opening 20 of the T-connector 1 on the peg side 23 of the T-connector 1. The shape of the peg 13 is also clearly shown on Fig. 1A, Fig.1B, and Fig. 3. The movement of the peg 13 is performed by screwing the bolt 3 into the peg 13.

When screwing, the cavity 16 of the peg 13 hook over the edge 18 of the opening 15 and fixes a position of the first profile 4 with respect to the second profile 5. Since the position of the peg 13 is adjustable in a continuous manner with respect to the second profile 5, the position of the peg 13 is changeable very precisely. Therefore, the peg 13 is hooked on the edge 18 of the opening 18 without a play and fixes connection without play between the profiles.

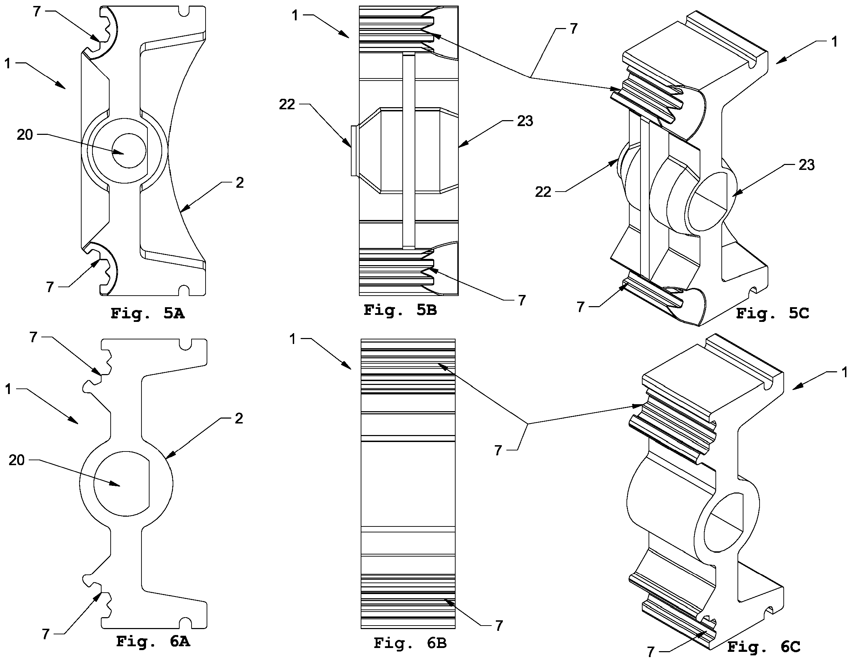

The hole 20 provided in the body 2 of the T-connector 1 extends through the body 2 in longitudinal direction of the body 2. In the first embodiment shown on Fig. 1A, the hole 20 has round cross-section at a regulatory side 22 of the body 2. The regulatory side 22 of the body 2 is a side from which the bolt 3 is screwed. The peg side 23 is a side of the body from which the peg 13 protrudes from the hole 20 and is inserted to the opening 15 provided in the second profile 5. A cross section of the hole 20 at the peg side 23 of the body 2 has cut circle shape. Since the shape of the peg 13 is also cut circle shape and in use, the peg 13 is at least partially accommodated in the opening 20, the peg 12 is not able to turn in the opening 20. The hole 20 at the regulatory side 22 has round cross-section, as shown in Fig. 5A-C and 6A-C, the bolt 3 can be screwed directly through the opening 20 provided in the body 2 into the peg 13. The T-connector according to the first embodiment of the invention can be manufactured for example by casting.

The first embodiment of the T-connector 1 according to the invention is shown in detail in Fig. 5a, Fig. 5b, Fig. 5c. In the first embodiment of the invention the recesses 6 are preferably provided with a widen portion shown in detail in Fig. 5b and Fig. 5c. The widen portion is a portion at an entry of the recess 6 which is a part which receives the fastening means 11 as a first during assembly. The widen portion facilitates inserting the fastening means 11 into the port 12.

Fig. 1B shows T-connector 1 according to the second embodiment of the invention. In the second embodiment the T-connector 1 has constant cross-section along the whole longitudinal length. Moreover, the opening 20 has the constant cross-section at the peg side 23 of the body 2 and the regulatory side 22 of the body 2. Second embodiment of the T-connector 1 according to the invention is shown in detail in Fig. 6a, Fig. 6b, Fig. 6c. Since the T-connector according to the second embodiment has constant cross-section, the T-connector 1 according to the second embodiment may be manufactured as being cut from a T-shaped profile having constant cross-section. As a consequence, the opening 20 has a shape of a cut circle at the whole length. Thus, there is a need to provide a self- centering nut 24 at regulatory side 22 of the opening 20 in order to screw the bolt 3.

The described invention is susceptible of numerous modifications and variations, all of which are within the scope of the appended claims. The inventive features as disclosed herein may be combined with each other without departing from the scope of the invention. All the details may further be replaced with other technically equivalent elements.

## Claims

1. A system for connecting two profiles at an angle, comprising a first profile (4) and a T-connector (1) adapted for connecting the first profile (4) with a second profile (5), wherein
the T-connector (1) comprises a body (2) shaped so that the body (2) is axially fastenable within the first profile (4),
the body (2) of the T-connector (1) is provided in the axial direction with two longitudinal recesses (6), wherein each longitudinal recess (6) of the body (2), is arranged in the extremity of the T-connector (1) adjacent to the corner area of the first profile (4) when the T-connector (1) is arranged within the first profile (4),
the first profile (4) is shaped so that two adjacent, internal corners of the first profile (4), which correspond to the extremity of the T-connector (1) provided with the longitudinal recesses (6), form longitudinal recesses (7), shaped along the length of the first profile (4),
wherein each of the longitudinal recesses (6) of the body (2) of the T-connector (1) constitutes a first part of a port (12) adapted for receiving fastening means (11) for fastening the T-connector (1) within the first profile (4), and each longitudinal recess (6) of the body (2) of the T-connector (1) is shaped for cooperating with the corresponding longitudinal recess (7) provided in the first profile (4), which constitutes a second part of the port (12), thus when the T-connector (1) is arranged within the first profile (4) each longitudinal recess (6) in the body (2) of the T-connector (1) with each recess (7) of the first profile (4) form the complete port (12) for receiving the fastening means (11).

2. The system according to claim 1, wherein the longitudinal recess (6) provided in the body (2) of the T-connector (1) is shaped so that it forms substantially a half of the port (12) for receiving the fastening means (11).

3. The system according to claim 1 or 2, wherein the port (12) formed by the longitudinal recess (6) provided in the body (2) of the T-connector (1) and the longitudinal recess (7) provided in the first profile (4) is in a form of a longitudinal opening.

4. The system according to any of the proceeding claims, wherein the longitudinal recess (6) provided in the body (2) of the T-connector (1) has a widen portion (19) for facilitating location of the fastening means (11) into the port (12), the widen portion (19) being located at an entry of the longitudinal recess (6) provided in the body (2) of the T-connector (1), which first receives the fastening means (11) during assembly.

5. The system according to any of the proceeding claims, wherein the T-connector (1) is made of metal, preferably zinc and aluminum based alloys.

6. The system according to any of the proceeding claims, wherein the T-connector (1) is cut from a longitudinal profile.

7. The system according to any of the proceeding claims, wherein the port (12) formed by the longitudinal recess (6) provided in the body (2) of the T-connector (1) and the longitudinal recess (7) provided in the first profile (4) is suitable for receiving a thread-forming screw.

8. The system according to any of the proceeding claims, wherein
the body (2) of the T-connector (1) is provided with a hole (20) arranged in the axial direction of the body (2), and in the hole (20) connecting means for connecting the first profile (4) with the second profile (5) are provided,
the connecting means comprise:
a peg (13) comprising a cavity (16) for accommodating an edge (18) of an opening (15) provided in the second profile (5), and
a bolt (3) for adjusting a position of the peg (13) in the axial direction in continuous manner to fix a position of said peg (13) with respect to the second profile (5).

9. The system according to any of the proceedings claims, wherein the longitudinal recess (7) provided in the first profile (4) constituting a second part of the port (12) is arranged at terminate parts of the first profile (4).

## Patentansprüche

1. System zum Verbinden von zwei Profilen unter einem Winkel, bestehend aus dem ersten Profil (4) und einem T-Verbinder (1),
der zum Verbinden des ersten Profils (4) mit dem zweiten Profil (5) vorgesehen ist, wobei der T-Verbinder (1) aus einem Körper (2) besteht, der so geformt ist, dass der Körper (2) axial innerhalb des ersten Profils (4) befestigt werden kann, der Körper (2) des T-Verbinders (1) ist in der axialen Richtung mit zwei länglichen Aussparungen (6) versehen, wobei jede längliche Aussparung (6) im Körper (2) am äußersten Ende des T-Verbinders (1) angrenzend an den Eckbereich des ersten Profils (4) angeordnet ist, wenn der T-Verbinder (1) innerhalb des ersten Profils (4) angeordnet wird,
wobei das erste Profil (4) so geformt ist, dass zwei benachbarte, innere Ecken des ersten Profils (4), die dem mit den länglichen Aussparungen (6) versehenen T-Verbinder (1) entsprechen und dabei auch längliche Aussparungen (7) bilden, die entlang der Länge des ersten Profils (4) geformt sind,
wobei jede längliche Aussparung (6) im Körper (2) des T-Verbinders (1) einen ersten Teil einer Einlassöffnung (12) bildet, die zur Aufnahme der Befestigungsmittel (11) zur Befestigung des T-Verbinders (1) im ersten Profil (4) vorgesehen ist, und jede längliche Aussparung (6) im Körper (2) des T-Verbinders (1) so geformt ist, dass sie mit der entsprechenden länglichen Aussparung (7), die in dem ersten Profil (4) vorgesehen ist, das den zweiten Teil der Einlassöffnung (12) bildet, zusammenwirkt, und zwar so, dass jede längliche Aussparung (6) im Körper (2) des T-Verbinders (1) mit jeder Aussparung (7) im ersten Profil (4) eine komplette Einlassöffnung (12) zur Aufnahme der Befestigungsmittel (11) bildet, wenn der T-Verbinder (1) innerhalb des ersten Profils (4) angeordnet ist.

2. System nach Anspruch 1, wobei die im Körper (2) des T-Verbinders (1) vorgesehene, längliche Aussparung (6) so geformt ist, dass sie grundsätzlich eine halbe Einlassöffnung (12) zur Aufnahme der Befestigungsmittel (11) bildet.

3. System nach Anspruch 1 oder 2, wobei die Einlassöffnung (12), die durch die im Körper (2) des T-Verbinders (1) vorgesehene, längliche Aussparung (6) und die im ersten Profil (4) vorgesehene, längliche Aussparung (7) gebildet wird, die Form einer länglichen Öffnung aufweist.

4. System nach einem der vorangehenden Ansprüche, wobei die im Körper (2) des T-Verbinders (1) vorgesehene, längliche Aussparung (6) einen verbreiterten Abschnitt (19) aufweist, um das Einführen des Befestigungsmittels (11) in die Einlassöffnung (12) zu erleichtern, wobei der verbreiterte Abschnitt (19) am Eingang zur im Körper (2) des T-Verbinders (1) vorgesehenen, länglichen Aussparung (6) angeordnet ist, die zuerst das Befestigungsmittel (11) während der Montage aufnimmt.

5. System nach einem der vorhergehenden Ansprüche, wobei der T-Verbinder (1) aus Metall, vorzugsweise aus Zink- und Aluminiumlegierungen, besteht.

6. System nach einem der vorhergehenden Ansprüche, wobei der T-Verbinder (1) aus einem Längsprofil zugeschnitten wird.

7. System nach einem der vorhergehenden Ansprüche, wobei die Einlassöffnung (12), die durch die im Körper (2) des T-Verbinders (1) vorgesehene, längliche Aussparung (6) und die im ersten Profil (4) vorgesehene, längliche Aussparung (7) gebildet wird, zur Aufnahme einer gewindefurchenden Schraube geeignet ist.

8. System nach einem der vorhergehenden Ansprüche, wobei der Körper (2) des T-Verbinders (1) mit einer Bohrung (20) versehen ist, die in der axialen Richtung des Körpers (2) angeordnet ist, und in der Bohrung (20) die Verbindungsmittel zum Verbinden des ersten Profils (4) mit dem zweiten Profil (5) vorgesehen sind,
wobei die Verbindungsmittel umfassen:
einen Stift (13), der einen Hohlraum (16) zur Aufnahme eines Randes (18) einer in dem zweiten Profil (5) vorgesehenen Öffnung (15) aufweist, und
einen Bolzen (3) zum stufenlosen Einstellen der Position des Stiftes (13) in der axialen Richtung, um den Stift (13) in Bezug auf das zweite Profil (5) zu fixieren.

9. System nach einem der vorhergehenden Ansprüche, wobei die in dem ersten Profil (4) vorgesehene, längliche Aussparung (7), die den zweiten Teil der Einlassöffnung (12) bildet, an den Endteilen des ersten Profils (4) angeordnet ist.

## Revendications

1. Système pour raccorder deux profilés en angle, comprenant un premier profilé (4) et un connecteur en T (1) adapté pour raccorder le premier profilé (4) avec un deuxième profilé (5), dans lequel
le connecteur en T (1) comprend un corps (2) conformé pour que le corps (2) puisse être fixé axialement à l'intérieur du premier profilé (4),
le corps (2) du connecteur en T (1) est prévu dans la direction axiale de deux évidements longitudinaux (6), chaque évidement longitudinal (6) du corps (2) étant disposé à l'extrémité du T- connecteur (1) adjacent à la zone d'angle du premier profilé (4) lorsque le connecteur en T (1) est disposé à l'intérieur du premier profilé (4),
le premier profilé (4) est conformé de sorte que deux angles internes adjacents du premier profilé (4), qui correspondent à l'extrémité du connecteur en T (1) muni des évidements longitudinaux (6), forment des évidements longitudinaux (7), conformés sur la longueur du premier profilé (4),
dans lequel chacun des évidements longitudinaux (6) du corps (2) du connecteur en T (1) constitue une première partie d'un orifice (12) adapté pour recevoir des moyens de fixation (11) pour fixer le connecteur en T (1) à l'intérieur du premier profilé (4), et chaque évidement longitudinal (6) du corps (2) du connecteur en T (1)
est conformé pour coopérer avec l'évidement longitudinal correspondant (7) prévu dans le premier profilé (4), qui constitue une deuxième partie de l'orifice (12), ainsi lorsque le connecteur en T (1) est disposé à l'intérieur du premier profilé (4) chaque évidement longitudinal (6) du corps (2) du connecteur en T (1) forme avec chaque évidement (7) du premier profilé (4) l'orifice complet (12) destiné à recevoir les moyens de fixation (11).

2. Système selon la revendication 1, dans lequel l'évidement longitudinal (6) prévu dans le corps (2) du connecteur en T (1) est conformé de manière à former sensiblement la moitié de l'orifice (12) destiné à recevoir les moyens de fixation (11).

3. Système selon la revendication 1 ou 2, dans lequel l'orifice (12) formé par l'évidement longitudinal (6) prévu dans le corps (2) du connecteur en T (1) et l'évidement longitudinal (7) prévu dans le premier profilé (4) se présente sous la forme d'une ouverture longitudinale.

4. Système selon l'une quelconque des revendications précédentes, dans lequel l'évidement longitudinal (6) prévu dans le corps (2) du connecteur en T (1) a une partie élargie (19) pour faciliter l'emplacement des moyens de fixation (11 ) dans l'orifice (12), la partie élargie (19) étant située à une entrée de l'évidement longitudinal (6) prévu dans le corps (2) du connecteur en T (1), qui reçoit en premier les moyens de fixation (11) lors du montage.

5. Système selon l'une quelconque des revendications précédentes, dans lequel le connecteur en T (1) est réalisé en métal, de préférence des alliages à base de zinc et d'aluminium.

6. Système selon l'une quelconque des revendications précédentes, dans lequel le connecteur en T (1) est découpé dans un profilé longitudinal.

7. Système selon l'une quelconque des revendications précédentes, dans lequel l'orifice (12) formé par l'évidement longitudinal (6) prévu dans le corps (2) du connecteur en T (1) et l'évidement longitudinal (7) prévu dans le premier profilé (4) est adapté pour recevoir une vis autotaraudeuse.

8. Système selon l'une quelconque des revendications précédentes, dans lequel
le corps (2) du connecteur en T (1) est pourvu d'un trou (20) disposé dans la direction axiale du corps (2), et dans le trou (20) sont prévus des moyens de connexion pour connecter le premier profilé (4) avec le deuxième profilé (5),
les moyens de connexion comprennent:
un pion (13) comprenant une cavité (16) pour loger un bord (18) d'une ouverture (15) prévue dans le deuxième profilé (5), et un boulon (3) pour ajuster une position du pion (13) dans la direction axiale de manière continue pour fixer une position dudit pion (13) par rapport au deuxième profilé (5).

9. Système selon l'une quelconque des revendications précédentes, dans lequel l'évidement longitudinal (7) prévu dans le premier profilé (4) constituant une deuxième partie de l'orifice (12) est disposé aux extrémités du premier profilé (4).
